# EUROPEAN PATENT APPLICATION

(11) **EP 4 745 918 A1**
(43) Date of publication of application: **20.05.2026**
(21) Application number: 25215450.5
(22) Date of filing: 13.11.2025
(51) Int. Cl.: G06V 20/20, G06N 5/022, G06Q 10/20

(54) **GUIDED VISUAL DIAGNOSIS SYSTEMS AND METHODS FOR EQUIPMENT FAILURES**

(30) Priority: 15.11.2024 US 202418949379
(71) Applicant: Hitachi, Ltd., Tokyo 100-8280 (JP)
(72) Inventor: GONZALEZ DIAZ, Maria Teresa, Tokyo, 1008280 (JP); WATANABE, Tsubasa, Tokyo, 1008280 (JP); ZHUGE, Huimin, Tokyo, 1008280 (JP); VIDYARATNE, Lasitha, Tokyo, 1008280 (JP); SIN, Gregory, Tokyo, 1008280 (JP); LEE, Xian Yeow, Tokyo, 1008280 (JP)
(74) Representative: MERH-IP Matias Erny Reichl Hoffmann Patentanwälte PartG mbB

(57) **Abstract**

Once a technician detects and reports an equipment failure, diagnostic systems and methods herein automatically generate a diagnostic plan, detailing necessary parts, areas of interest, and actions to be taken. Using augmented reality (AR) indicators, a system guides the technician while a perception module analyzes their actions to recommend next steps. A planning component uses knowledge graph (KG) and LLM to create the diagnostic plan, without requiring extensive data labeling or model training. A tracking component enhances 3D detections by employing perception sensors and a 2D nested object detection model. A guiding component simplified processed for novice technicians by integrating 2D models and AR interactions to ensure efficient and accurate diagnostics.

## Description

### BACKGROUND

### Field

The present disclosure is generally directed to computer vision applications, and more specifically, to systems and methods guided visual diagnosis systems and methods for vision-based monitoring applications such as failure inspection.

### Related Art

With the proven success of AI technology for computer vision, many industries have started to introduce vision-based systems that automate processes such as inspection, quality control, equipment monitoring. Existing solutions are limited to image acquisition followed by AI-based models that identify objects and defects. However, minimal work has been done to automate visual root cause analysis for onsite diagnosis. Current support services tools are focused on remote assistance that still require a remote expert to guide onsite technicians. These remote systems are oftentimes ineffective due to network latency, which restricts interactivity, coordination, and collaboration. Automated solutions for effective support services, such as failure diagnosis and repair, are crucial to improve customer satisfaction, retention, and loyalty. However, providing consistent, high quality, and timely support is a challenging task. In practice, customer support usually requires technicians to perform onsite diagnosis, but the quality of the support is often negatively impacted due to limited availability of expert technicians, high turnover, and minimal automated tools.

Building automated guidance solutions faces three main challenges. First, knowledge bases are required to provide reasoning and extensibility, but traditional methods require extensive data and labels. Second, scene understanding is crucial to guarantee quality of visual guidance, but existing methods are not sufficient for environment variations of customer sites. Third, advanced user interfaces are required to be intuitive and useful, but AR with 3D methods are slow for rich human interaction. Recent trends that explore new methods for industrial services are influenced by breakthroughs in large language models (LLMs) and augmented/virtual reality, which offer new methods and opportunities for enhancement.

Advantageously, unlike traditional remote solutions, embodiments herein provide a smart system that generates diagnostic plans for troubleshooting, guiding the onsite technician regardless of experience. This leads to efficient and effective diagnostic processes, reducing the need for expert technicians, and ensuring high-quality support at customer sites.

Visual inspection systems have been widely incorporated to analyze an image for defects detections in different types of equipment. Deep learning-based methods have demonstrated an acceptable performance in automating business pipelines related to quality control and to streamline maintenance and repair. Popular applications of visual inspection systems are related to surface defects such as cracks in road, welding, building, damages in railroads or vehicles. Common deep learning models used in these systems include classifiers, such as ResNet, MobileNet, and Swin Transformers; real time object detectors, such as the Yolo series; and instance segmentation models, such as MaskRCNN, DeepLab and Yolov7s. These detectors are mainly trained for defect or anomaly detection from independent images. However, minimal work has been done to identify failure root cause from multiple and correlated views and objects.

General assistance systems such as chatbots have been widely used for customer support. However, visual assistance systems remain limited to messages action instructions. Advanced assistant systems generally include some form of Knowledge Base (KB) to provide information for a wide range of assistive tasks. However, traditional KB development requires large amounts of data that make the KB development process slow and complex. The main task of building knowledge graphs is focused on entity and relation extraction (RE) to enable reasoning based on graph semantics. Popular approaches to extract entities and relationships include custom seq2seq models and REBEL. With the advent of LLM, such as ChatGPT^{®}, entity tagging, and relation extraction have been revisited to evaluate possible performance for domain-specific knowledge. It has been demonstrated that it is possible to achieve high performance on relation extraction with minimal training data. Embodiments herein use LLMs to extract industrial entities such as parts, components, systems, and diagnostics tasks.

Substantial work has also been done on scene understanding, especially in areas like autonomous robots and driving systems. Scene understanding includes analyzing and interpreting the functional context and semantics of objects with respect to the relationship with the 3D space and layout. Methods for scene understanding can be categorized into object-oriented and spatial-oriented. A scene graph representation captures objects and their relationships within the physical layout, such as rooms or gardens. Traditional 2D and 3D approaches suffer from low accuracy and stability in situations involving object transparency and high reflections. Our focus is on objects of interest (parts) and related key objects representing spatial relationships defined as areas of interest.

With the proliferation of Augmented Reality (AR) libraries like Apple^{®} ARkit^{®}, Google^{®} ARCore^{®}, and WebAR, several AR approaches have been designed for navigation guidance, assembly tracking, repair assistance. However, there is minimal guidance for diagnosis in which technicians only take ad-hoc images as references or records. Most of the AR applications integrate overlay annotations to interact with the user, using either 1) physical markers (e.g., lines over floor, or bar codes over objects) or 2) 3D object recognition to identify the target objects. To identify objects, these solutions involve three steps: First, a 3D scanner that learns the environment. Second, the 3D object representations are generated as CAD objects, point cloud, etc. Third, an application uses the 3D representation to recognize the scanned objects. However, 3D model accuracy is still highly impacted by environmental differences (background, area, lighting, layout, etc.). In practice, creating 3D environment in a general way is challenging and sometimes infeasible. In addition, 3D recognition remains a challenge for real-time systems due to latency (greater than one second). Unlike such approaches, embodiments herein utilize 2D object recognition models that outperform 3D detection accuracy and response time.

### SUMMARY

Systems and methods herein enable diagnostic processes for equipment failures. Once a technician reports a detected failure, various embodiments automatically generate a diagnosis plan that includes necessary parts, areas of interest, diagnostic tasks and actions to be taken. The plan is used to guide the technician using AR indicators, while a perception module analyzes and tracks the technician's actions to recommend next steps. In embodiments, this is accomplished by three main components involving planning, tracking, and guiding. The planning component automates the creation of a diagnostic plan by querying a knowledge graph (KG), which is constructed using an LLM to accelerate the extraction of parts, components, tasks, and relations from manuals. The system leverages an LLM with few-shot prompting without the need for extensive data labels or model training. The tracking component is designed to enhance 3D detections by employing perception sensors with a 2D nested object detection model. The guiding component reduces process complexity for novice technicians by integrating 2D models and AR interactions to ensure an efficient and accurate diagnostic process.

In some aspects of the disclosure, a guided visual diagnosis method for equipment failures comprises: in response to receiving information of a failure associated with an equipment, using an LLM to build a KG that is used to generate a diagnostic plan, wherein the KG is constructed by a KG builder that extracts information from one or more documents to construct a graph including at least one of a part, component, spatial area, or a diagnostic task related to a text source, thereby reducing a need for manual data labeling or model training; using the diagnostic plan and real-time AR indicators to guide a user through a diagnosis process, the AR configured to overlay visual indicators in visual data captured by the user; using an image-builder, which builds an image-based model to detect areas and parts for scene understanding, the image-builder using a perception module including one or more perception sensors, to analyze and track a user action to enhance 3D scene understanding; generating an indicator database including overlay annotations extracted from at least one of 2D images, paths, markers, or messages; utilizing a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis; and employing AR tracking and interaction modules to manage visual indicators and guide the user through the diagnostic checklist, until all checkpoints in the diagnostic checklist are satisfied.

In some aspects, the text source includes a manual, a parts lists, a text, or a failure report.

In some aspects, the 2D nested object detection model uses a training dataset including a relatively small set of training samples to increase detection accuracy.

In some aspects, the perception module provides feedback and a recommendation based on the analysis and tracking of actions, e.g., in real-time, and the perception sensors include a camera and/or motion sensor.

In some aspects, an initial calibration comprises mapping the user and the equipment in a 3D space by using 2D images and AR tracking, wherein each of the 2D images may comprise at least a portion of an object of interest.

In some aspects, a non-transitory computer-readable medium for storing instructions for executing a process, the instructions including: in response to receiving information of a failure associated with an equipment, using an LLM to build a KG that is used to generate a diagnostic plan, wherein the KG is constructed by a KG builder that uses the LLM to extract information from one or more documents to construct a graph comprising at least one of a part, component, spatial area, or a diagnostic task related to a text source, thereby reducing a need for manual data labeling or model training; using the diagnostic plan and real-time AR indicators to guide a user through a diagnosis process, the AR configured to overlay visual indicators in visual data captured by the user; using an image-builder, which builds an image-based model to detect areas and parts for scene understanding, the image-builder using a perception module including one or more perception sensors, to analyze and track a user action to enhance 3D scene understanding; generating an indicator database including overlay annotations extracted from at least one of 2D images, paths, markers, or messages; utilizing a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis; and employing AR tracking and interaction modules to manage visual indicators and guide the user through the diagnostic checklist, until all checkpoints in the diagnostic checklist are satisfied.

In some aspects, the text source includes a manual, a parts lists, a text, or a failure report.

In some aspects, the 2D nested object detection model uses a training dataset including a relatively small set of training samples to increase detection accuracy.

In some aspects, the perception module provides feedback and a recommendation based on the analysis and tracking of actions, e.g., in real-time, and the perception sensors include a camera and/or motion sensor.

In some aspects, an initial calibration comprises mapping the user and the equipment in a 3D space by using 2D images and AR tracking, wherein each of the 2D images may comprise at least a portion of an object of interest.

In some aspects, the techniques described herein relate to an apparatus, including: a processor, configured to: in response to receiving information of a failure associated with an equipment, use an LLM to build a KG that is used to generate a diagnostic plan, wherein the LLM enables the KG, thereby reducing a need for manual data labeling or model training; use the diagnostic plan and real-time AR indicators to guide a user through a diagnosis process, the AR configured to overlay visual indicators in visual data captured by the user; use an image-builder, which builds an image-based model to detect areas and parts for scene understanding, the image-builder using a perception module including one or more perception sensors, to analyze and track a user action to enhance 3D scene understanding; generate an indicator database including overlay annotations extracted from at least one of 2D images, paths, markers, or messages; utilize a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis; and employ AR tracking and interaction modules to manage visual indicators and guide the user through the diagnostic checklist, until all checkpoints in the diagnostic checklist are satisfied.

Aspects of the present disclosure can involve a system, which can involve means for performing steps comprising, in response to receiving information of a failure associated with an equipment, using an LLM to build a KG that is used to generate a diagnostic plan, wherein the LLM enables the KG, thereby reducing a need for manual data labeling or model training; means for using the diagnostic plan and real-time AR indicators to guide a user through a diagnosis process, the AR configured to overlay visual indicators in visual data captured by the user; means for using an image-builder, which builds an image-based model to detect areas and parts for scene understanding, the image-builder using a perception module including one or more perception sensors, to analyze and track a user action to enhance 3D scene understanding; means for generating an indicator database including overlay annotations extracted from at least one of 2D images, paths, markers, or messages; means for utilizing a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis; and means for employing AR tracking and interaction modules to manage visual indicators and guide the user through the diagnostic checklist, until all checkpoints in the diagnostic checklist are satisfied.

### BRIEF DESCRIPTION OF DRAWINGS

FIG. 1 illustrates exemplary areas of interest and viewpoints according to various embodiments of the present disclosure.
FIG. 2 illustrates example system flows according to various embodiments of the present disclosure.
FIG. 3 illustrates a core technology architecture and interactions for AI and AR guided diagnosis for a system for guided diagnosis according to various embodiments of the present disclosure.
FIG. 4 illustrates indicators for technician guidance according to various embodiments of the present disclosure.
FIG. 5 and FIG. 6 are exemplary workflows that illustrate guided diagnosis processes according to various embodiments of the present disclosure.
FIG. 7 depicts a knowledge-base construction module and plan generator according to various embodiments of the present disclosure.
FIG. 8 depicts an exemplary expected output according to various embodiments of the present disclosure.
FIG. 9 depicts an exemplary viewpoint graph according to various embodiments of the present disclosure.
FIG. 10 illustrates an exemplary workflow for model training and inference according to various embodiments of the present disclosure.
FIG. 11 depicts exemplary object labels for 2D nested object models according to various embodiments of the present disclosure.
FIG. 12 illustrates an exemplary 2D nested object detection according to various embodiments of the present disclosure.

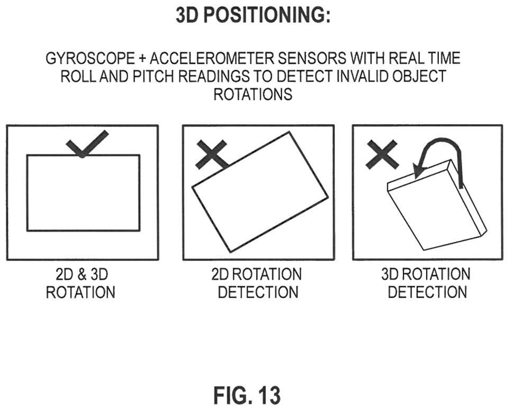

FIG. 13 depicts exemplary detected rotations according to various embodiments of the present disclosure.
FIG. 14 is a flowchart illustrating a process for guided visual diagnosis for equipment failures, according to various embodiments of the present disclosure.
FIG. 15 illustrates an example computing environment with an example computer device according to various embodiments of the present disclosure.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

In this document, the terms "technician" and "inspector" are used interchangeably. Similarly, the terms "diagnostic plan," "checklist plan," "checklist," and "plan" may be used interchangeably. Any headings are used for organizational purposes only and shall not be used to limit the scope of the description or the claims. Each reference/document mentioned in this patent document is incorporated by reference herein in its entirety.

### Overview

Embodiments herein extended previous frameworks to provide guidance for diagnosis cases. Technicians need to know which parts to check to identify the root cause. The equipment must be inspected from different areas and perspectives, including close-up view of specific areas and parts within a viewpoint, due to space limitations or resolution needs while capturing visual inputs. In such embodiments, the multi-point inspection is divided to small areas of interest (for example, controller area or refrigeration) within a viewpoint of the equipment (front or left). Technicians are required to evaluate these areas of interest by collecting visual records to serve as evidence of the equipment's status. The process involves determining the condition of the parts within these areas of interest and recommending repairs if needed.

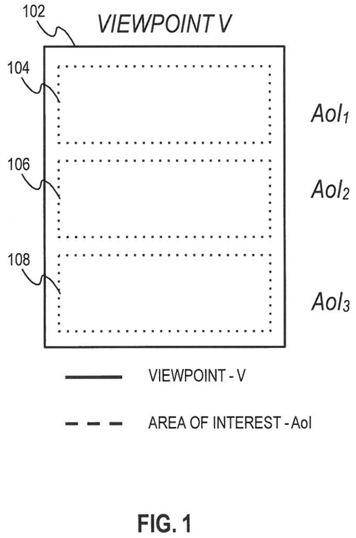

In this context, the checklist viewpoint plan V is redefined as checklist of areas of interest *AoI = { αᵢⱼ, ..., αₘₙ}* within viewpoint of interest V = *{ vⱼ, ..., vₙ},* where *AoI ∈ V, αᵢⱼ* is a partition j of a viewpoint v and *i <=* n and j *<= m, n* is number of viewpoints to inspect and m is number of areas of interest for given viewpoint *j.* The new plan is denoted as *area of interest* plan where *AoI* is defined as complete viewpoint *V* or a subset of V. FIG. 1 illustrates exemplary areas of interest and viewpoints according to various embodiments of the present disclosure. As depicted, complete viewpoint V 102 comprises areas of interest *AoI* 104-108.

### Problem Definition

In the context of support services, a visual equipment diagnosis may be defined as the process required to find the root cause of a failure reported by a customer. Since the failure is usually only a symptom of the main problem, this process requires more comprehensive visual evaluation and troubleshooting of the equipment. Through this detailed process, the technician can determine an appropriate repair recommendation or failure mitigation. Therefore, the quality of this job is heavily dependent on the technician's expertise. If the technician lacks sufficient expertise, they may need to search through manuals to determine the appropriate troubleshooting steps and the parts to check, which may be both inaccurate and time-consuming.

Embodiments herein enable technicians to perform diagnosis regardless of their expertise level, equipment type, or the complexity of the failure. Given a piece of equipment, E, and a reported failure, f, the following definitions apply:

Viewpoint of Interest: Let equipment E with 3-Dimension (3D) structure be composed of viewpoints *V={v₁,...,vₙ}* where *n>0.* V denotes spatial planes of the equipment and is used for physical navigation. For example: front, back, side, etc.

Areas of Interest: Given a viewpoint *vᵢ*, composed of areas *A={a_{1,i},...,a_{m,n}} where m > and i>0. A* denotes as set of mutually exclusive splits within viewpoint *vᵢ*. For example: (top, front), (middle, front), (bottom, front).

Part-component-system: Let parts *P=*{*p₁,...,pₖ*} where *k >0. P* denotes available parts that are located into specific area *a_{j,i}* and viewpoint *vᵢ* (spatial plane). For example: filter, holder, handle, etc.

Diagnostic Task: Let *T={t₁,...,tₖ*} where *k >=0* denotes a task to be performed by a technician to determine the root cause of a failure. For example: open door, turn on, move up, etc.

Diagnostic Plan: Let *D={s₁,...,sₙ}* where n>0 that denotes a sequence of steps *sₙ* to diagnose the failure *f.* Each step *sᵢ* is defined as *sᵢ* = *(pᵢ, tᵢ)* where part *pᵢ* is the part to check and the *t*ᵢ the task to perform where *pᵢÌ area a_{j,i}Ì* viewpoint *vᵢ*. Each step *sᵢ* includes 1) visual evaluation, 2) requirements validation and 3) automatic recording (videos or images) of the part *pᵢ.* For example: at the step *sᵢ*, the technician needs to: 1) evaluate the engine part which is visible in the middle area, and viewpoint front by opening the door, and 2) satisfy size, orientation and coverage to trigger the automatic recording of the part.

Diagnostic Requirements: Let *R={r₁,..., rₖ}* represent expected requirements of the visual records to be satisfied during the diagnosis. For example: size, coverage, orientation, etc.

Guided Visual Diagnosis: Let *GD* represent the process assisted by a system based on a diagnostic plan *D* and requirements *R.* The system uses text messages, AR instructions and AR navigation to evaluate possible causes of the failure f.

Given a failure f reported for a given equipment E, define general guidance methods that maximize process quality *Q* of parts evaluated and recorded for a given diagnostic plan *D.* Define quality as a function of completeness, and consistency. Completeness is defined as the completion of the diagnostic plan generated by query a knowledge graph, where *D={s₁,...,sₙ}* for a failure *f* with steps *sᵢ = (pᵢ, tᵢ)* and perform where *pᵢ Ì* area *a_{j,i} Ì* viewpoint *vᵢ*. Consistency is defined as the similarity between expected visual records (images or videos) and actual captures by the technician. Similarity is denoted by comparison of visual requirements R and observed conditions *O*) where C = *sim(images, R, O*) where R and O include size, orientation, coverage, etc.

### Challenges and Solutions

Existing challenges include (1) Complex diagnosis fault methods; troubleshooting involves detailed fault tree tables that include multiple parts and components specific to the type of product and its failures. Diagnosis of a failure requires an expert technician and can vary based on the equipment time; (2) Highly translucent and reflective areas: industrial equipment usually comprises translucent materials (e.g., glass) or high reflective surfaces (e.g., aluminum). These material reflect their surroundings and increase complexity of scene understanding; (3) visual variations of equipment conditions at customer sites: equipment conditions encounter intricate conditions due to installation environment and day-to-day usage; (4) limited inspection indoor areas: machines are installed in confined spaces, offer limited space to technicians to maneuver, increasing the likelihood of occlusions that hinder full 360-degree inspection; and (5) fast response time methods: user-interactive systems require rapid response times, e.g., within less than a second to provide seamless interaction.

Therefore, it is desirable to have systems and methods that maximize the quality of the visual diagnosis process, regardless of the technician's expertise, the machine's installation location, the type of machine, or the nature of the failure. A main objective is to capture useful visual inputs that can be further used for remote defect diagnosis, part replacement, repair, and degradation tracking.

To ensure quality of visual diagnostic by non-expert technicians at the customer locations, embodiments herein enable efficient equipment diagnosis. The system integrates mechanisms to automatically 1) generate a diagnostic plan, 2) guide the technician, and 3) track their actions to troubleshoot areas potentially causing the failure. Various embodiments comprise online flow and offline tasks. The offline tasks further comprise three main components:
1) a KG builder that constructs a knowledge graph with parts, components, spatial areas, and tasks to enable diagnosis plan generation.
2) a model builder that builds an image-based model to detect areas and parts detections that enable scene understanding for the diagnosis process.
3) an indicator builder that generates an indicator database that comprises overlays extracted from 2D images, paths, markers, and messages.

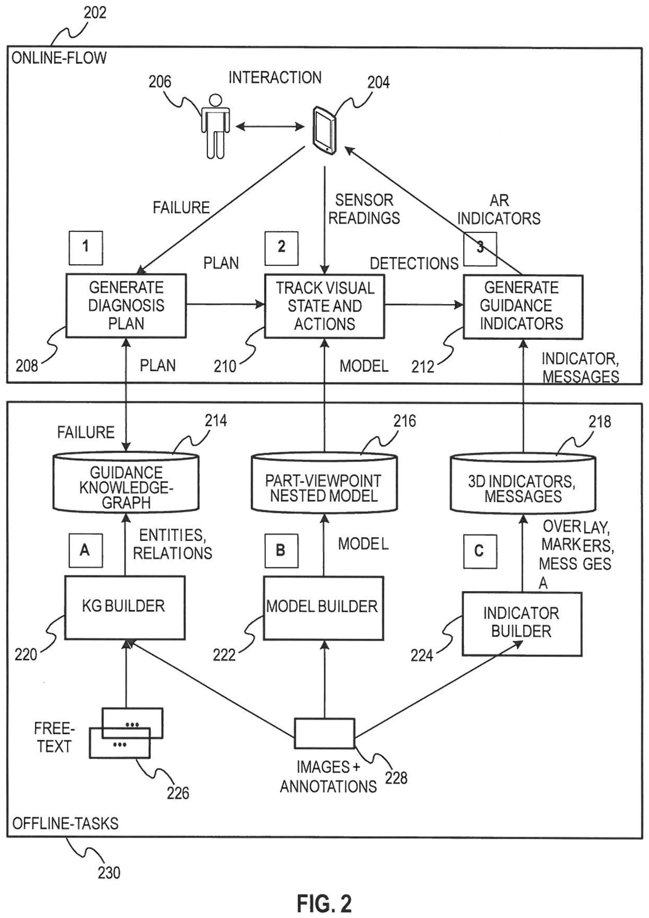

Similarly, the online flow comprises three main steps: 1) generating the plan, 2) tracking the plan, and 3) guiding the technician. FIG. 2 illustrates example system flows according to various embodiments of the present disclosure, described in detail further below. Online-flow 202 illustrates interactions between device 204, user 206, and steps comprising generating a diagnosis plan 208, tracking visual state and actions 210, and generating guidance indicators 212. Conversely, offline-tasks 230 comprise interactions between images and annotations 228 and knowledge graph builder 220, model builder 222, and indicator builder 224.

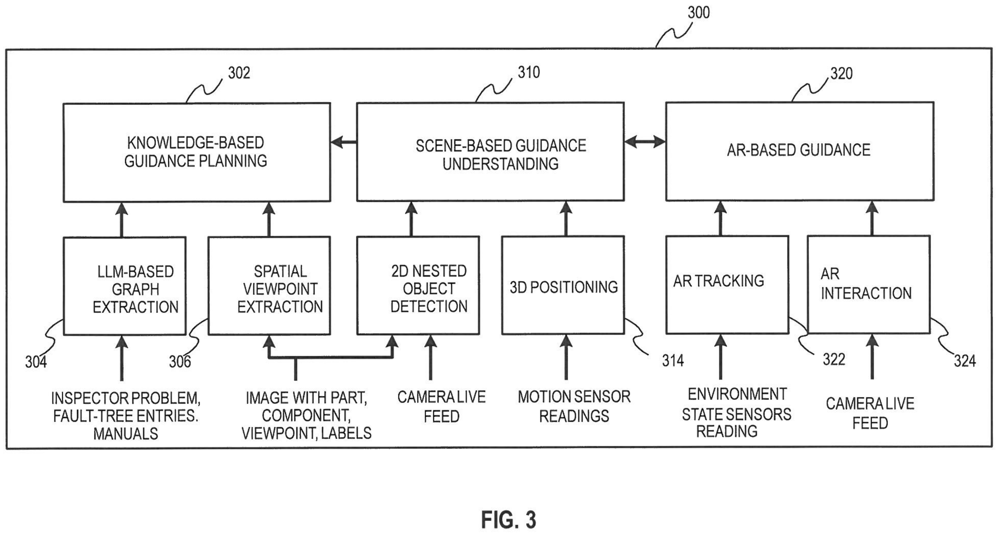

FIG. 3 illustrates a core technology architecture and interactions for AI and AR guided diagnosis for a system for guided diagnosis according to various embodiments of the present disclosure. In embodiments, system 300 comprises three main components: knowledge-based guidance planning module 302, scene-based guidance understanding module 310, and AR-based guidance module 320, each comprising two sub-modules. As depicted in FIG. 3, knowledge-based guidance planning 302 comprises LLM-based extractor 304 and spatial viewpoint extractor 306. Scene-based guidance understanding module 310 comprises 2D nested object detector 312 and 3D positioning module 314. AR-based guidance 320 comprises AR tracking module 322 and AR interaction module 324.

In embodiments, knowledge-based guidance planning module 302

In embodiments, system 300 uses free-text descriptions of equipment problems, fault trees, and other related text references to identify diagnostic tasks, components, parts relation, and spatial viewpoint information. This information determines the steps that an operator should perform during an inspection. Embodiments leverage LLM models with retrieval-augmented generation (RAG) techniques to extract entities and the relationships, enabling the system to build an inspection checklist. This significantly reduces the time required for manual plan generation from weeks to minutes, thereby facilitating fast deployment of guidance for new equipment, with minimal manual labor.

An art-component-position extractor may identify the to-be-inspected equipment parts by extracting entities and their relationships from a subset of text associated with those parts, and a viewpoint-part-component mapper may identify the spatial location of the part that the technician needs to evaluate during the inspection by using a knowledge graph constructed from an image dataset of parts and viewpoints to query and create the diagnosis plan that a technician will follow during the inspection process.

Scene-based guidance understanding module 310 uses perception sensors (camera and motion) and AI-based models to determine current objects on the scene and analyzes their size, orientation, position, and coverage relative to a checklist plan. Module 310 may use a closed feedback loop of the environment and the inspection performed by the technician to analyze the visual environment to determine whether the technician is following the instructions to complete the checklist plan. As depicted, scene-based guidance understanding module 310 uses 2D nested object detector 312 and 3D positioning module 314.

2D nested object detector 312 enhances boost detection precision based on spatial object relationships. This method analyzes the scene from a live camera feed to determine viewpoint-area-parts of interest and their spatial semantics to determine correct size, 2D horizontal alignment, and coverage. System 300 combines 2D detections for fast inference instead of 3D object detection (point cloud) and reconstruction as point cloud detection is slower and less precise due to lighting conditions.

3D positioning module 314 uses motion sensors to determine current 3D object alignment and orientation compared with expected plan. It determines alignment, orientation, and rotation of the objects while the technician explores the equipment. Some areas may require orthogonal views while others may require some inclination. 3D positioning module 314 further processes readings (pitch and roll) from motions sensors, e.g., three times per second, to determine if the orientation and rotation are correct or incorrect.

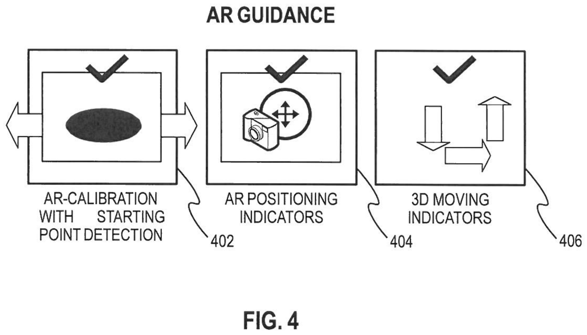

AR-based guidance module 320 may use ARKit to interact with the technician in 3D space. ARKit provides the foundation to determine the physical space and motion using the perception sensors. This component controls the list of interactions with the technician based on the inspection plans and the status of the environment. Objects are detected with 2D models and then mapped in the 3D environment using AR markers and notifications that communicate the next steps in the process to the technician as shown in FIG. 4. AR-based guidance module 320 uses AR tracking module 322 and AR interaction module 324.

AR tracking module 322 uses *(x*,*y)* positions translated into *(x*,*y,z)* coordinates via a starting-point calibration mechanism. With this initial step, the machine and the technician are mapped in 3D space. As a result, the system can show markers and indicators as part of the camera view even if the technician moves.

AR interaction module 324 manages the visual indicators to guide the technicians to follow expected behavior to complete a checklist plan. Markers are displayed in 3D space *(x,y,z)* mapped to the 3D space of the technician to indicate real space position on the machine. If the technician moves, the markers are maintained in the real 3D space. AR interaction module 324 may use navigation, detection, orientation, and alignment indicators to help the user to follow the expected plan.

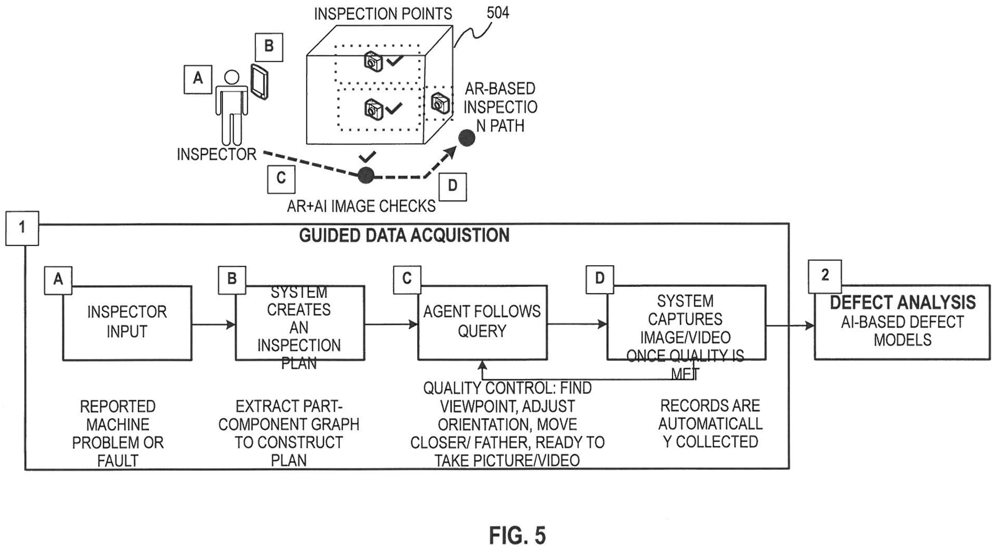

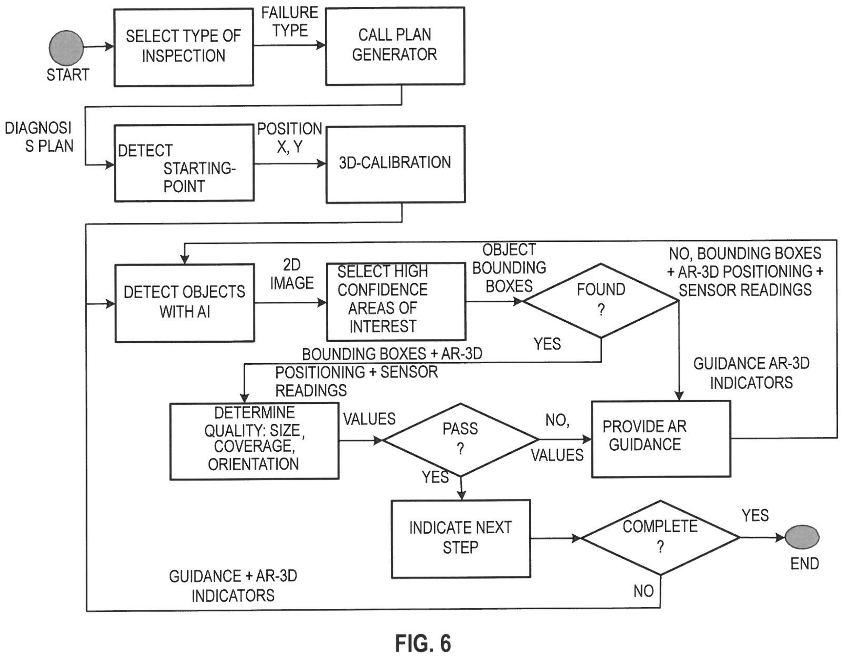

FIG. 5 and FIG. 6 are exemplary workflows that illustrate guided diagnosis processes according to various embodiments of the present disclosure. A technician may first select a type of checklist plan that is to be performed, then a camera live feed is activated. The collection process starts with finding a starting point to enable positioning the camera view with respect to the real-world 3D coordinates of the technician, such that the system can determine how to start the guidance process. Once the initial point is determined, the system displays markers that indicate where the technicians need to capture visual records based on the selected checklist plan. Then, a loop of instructions and indicators guide the technician to find the checkpoints. The system displays indicators and messages to guide the technician based on the evaluation of the requirements. If the requirements are satisfied, the system indicates technicians can capture the data and proceed to the next item in checklist. The process is competed once all the checkpoints have been captured.

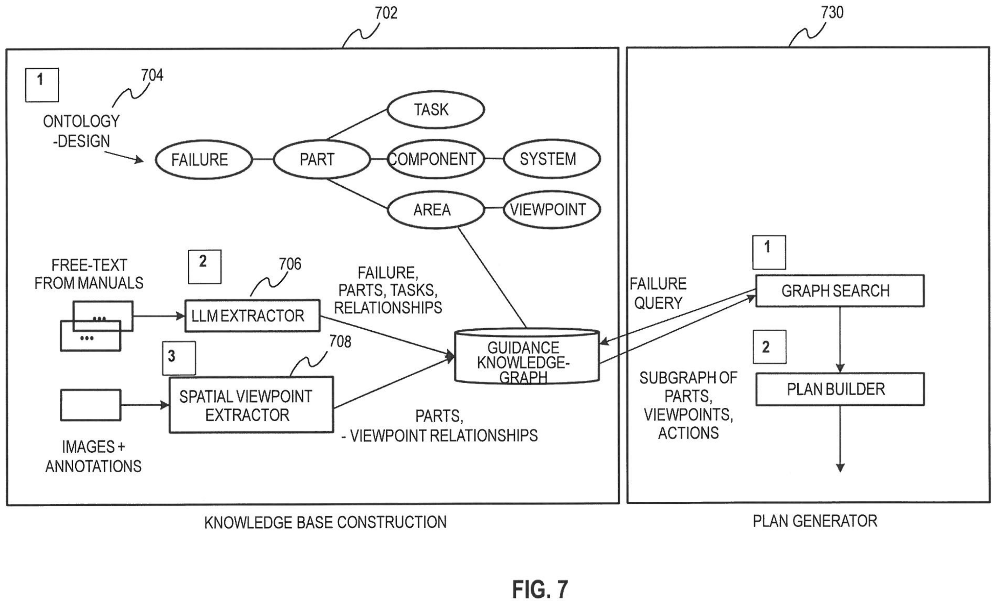

In embodiments, to plan the inspection points that the technicians need to follow to diagnose equipment failure, the system automatically builds the diagnosis plan leveraging LLM methods. The system uses free-text, e.g., from existing fault-trees and manuals to identify the elements that need to be inspected when a problem is reported. To achieve this, two main modules (illustrated in FIG. 7) may be used: (1) knowledge-base construction module 702 and (2) plan generator 730. As discussed in greater detail below, knowledge-base construction module 702 may comprise ontology design 704, which defines main concepts for building the KG; LLM extractor 706, which extracts a task-part-components graph; and viewpoint extractor 708, which extracts viewpoint from image annotations.

In embodiments, ontology design 704 enables reasoning with a rich knowledge base and is define an ontology that comprises categories of {parts P, components, systems, tasks T, areas A, viewpoints V, Failures F}. FIG. 2 depicts the example of classes and relations for creating diagnostic plan D for failure f. As described below, {Tasks, parts, components, system} are categories automatically extracted from text using the LLM. {Viewpoint, area and part relationship} are extracted from the image annotation dataset.

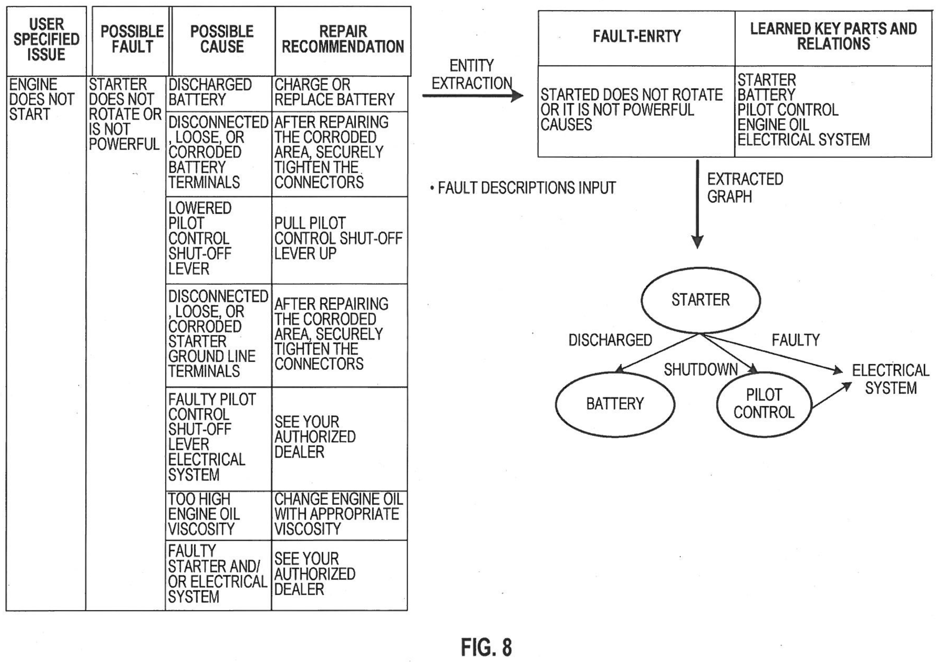

In embodiments, LLM extractor 706 extracts the entities that represent parts or components of the equipment, e.g., sauce container, motor, controller, and the like. To achieve this, an LLM enables using a specific data source for output generation. To generate the graph of parts (or components) and relations, a prompt with instructions and examples of the expected extraction may be generated. Then, the data source, including fault-tree related to the problem, technician description, and other text-free materials are provided. Model generation is requested as a completion task to obtain entities and relationships expressed as a graph. Additionally, specific prompts may be used to extract the position of the parts. FIG. 8 depicts an exemplary expected output according to various embodiments of the present disclosure.

To extract parts and relationships, an LLM may use the following pseudocode of parts and task extractions:

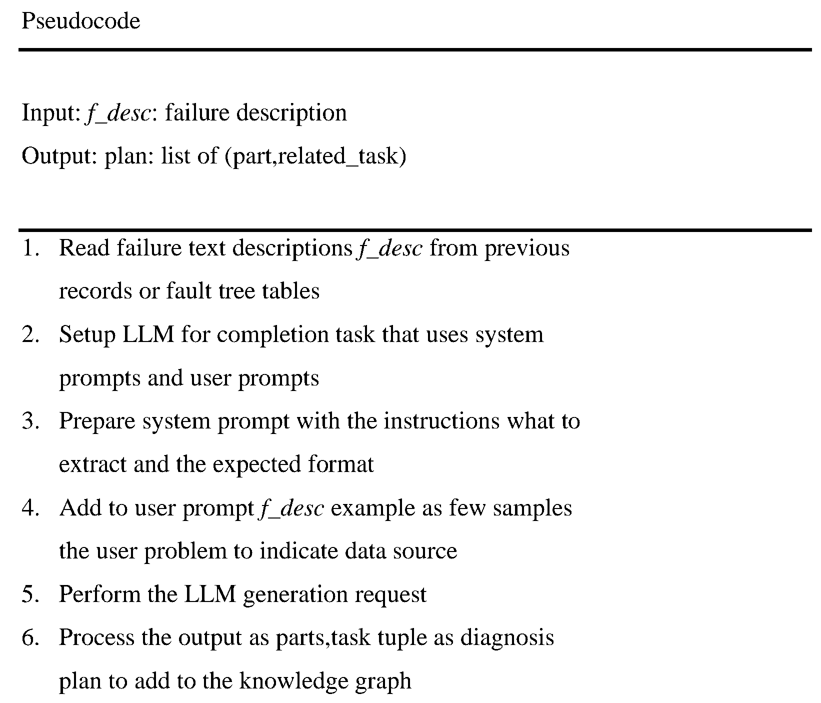

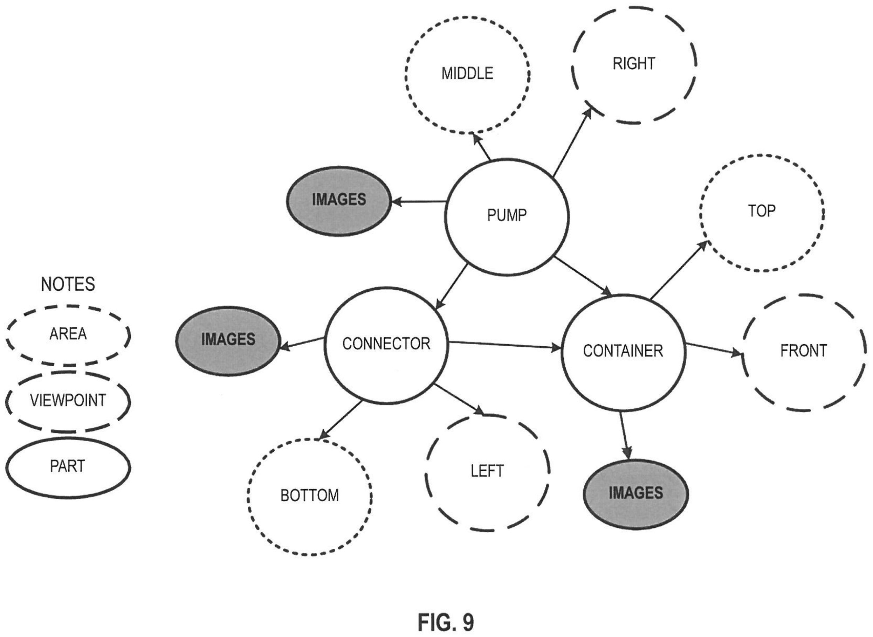

In embodiments, viewpoint extractor 708 obtains a spatial relationship (physical) of the part within the equipment, such that the guidance understanding and interaction components can help the technician to collect the information from the machine. To achieve this, a knowledge-graph of parts and viewpoint may be constructed by using image data labels. Give a set of images with labels that denote parts, areas of interest and viewpoint relations a knowledge graph is created. This may be accomplished by scanning the images, extracting the labels, and creating relationships by finding object overlaps. For example, for a part that should belong to specific area and specific viewpoint, the object overlap with the viewpoint and area annotations is computed. To perform the mapping found in the part extractor, viewpoint extractor 708 queries the viewpoint graph to identify the part-viewpoint relationship. FIG. 9 depicts an exemplary viewpoint graph according to various embodiments of the present disclosure.

In embodiments, diagnosis plan generator 730 (shown in FIG. 7) generates a plan that a technician needs to follow during the diagnosis process. The plan may comprise a list of to-be-completed checkpoints that may be defined as viewpoint+area, part, list of requirements triples to satisfy size and orientation. The list may be sorted by viewpoint to reduce movement during the inspection process.

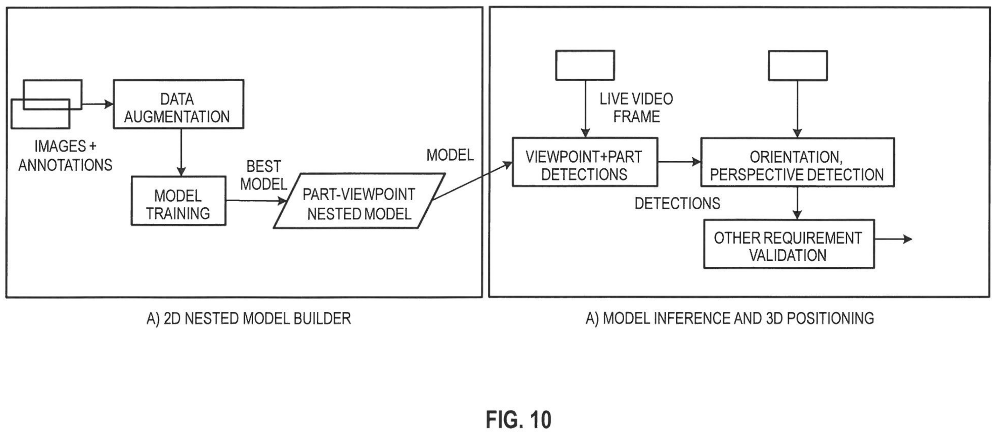

Returning to FIG. 3, in embodiments, scene-based guidance understanding module 310 applies scene understanding methods to understand the state of the data acquisition executed by the technician. Module 310 utilizes perception sensors (camera and motion) and AI-based models to determine the visible objects, and their size, orientation, position in relation to the checklist plan. To achieve this, module 310 uses 2D object detection (nested object detection) module 312 and 3D positioning module 314. FIG. 10 illustrates an exemplary workflow for model training and inference according to various embodiments of the present disclosure.

In embodiments, 2D nested object detection module 312 detects viewpoints (e.g. top, middle, etc.) and areas of interest (e.g. controller, refrigeration, etc.) to enable checklist AR guidance. As previously mentioned, traditional object detectors often face challenges in achieving high accuracy due to limited data availability from brand-new products and high-reflection materials such as aluminum and glass surfaces. For example, the machine surfaces may present reflection of other objects or objects behind glass doors depending on the customer stores. To address these challenges, embodiments herein train a 2D object model with nested object labels, increasing confidence scores and overall detection precision. The training dataset is designed with target areas of interest (viewpoint+area), key anchor objects (parts), and object relationships (spatial semantics).

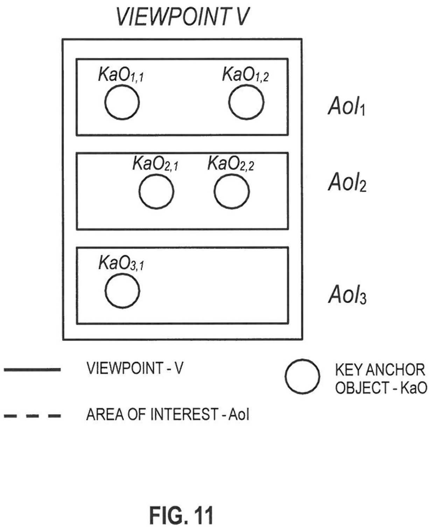

FIG. 11 depicts exemplary object labels for 2D nested object models according to various embodiments of the present disclosure. Areas of interest (AoI) comprise a set of objects within a viewpoint V. Target objects are labeled as viewpoint + area, for example front-top, front-middle, left-top, etc. In this case, outer objects that represent viewpoints of interest like front and left and areas of interest like top and middle may be defined. Key anchor objects *(KaO)* are well-defined like shape, contrast, light, color, etc. Key anchor objects include a set of 1 *or more* objects nested on the target viewpoints-areas, where *KaO_{j,i} ∈ AoIⱼ, i>*1 and *j*>1. The key anchor objects are selected in such a way object detectors work with high precision and propagate the loss activation for outer objects. As a result, the precision of outer object detection also increases. Anchor objects address the problem of reflective and translucent surfaces. This forces the model to learn the representations of objects with minimal variations, which influences the learning of the other areas that have more variations.

Various embodiments imply spatial information built-upon object relationships. Inner objects, which are identified with high accuracy, are used to imply the outer object should be also implied. FIG. 11 illustrates examples of labels (bounding boxes) for inner and outer objects for an example machine use case. Areas of interest: top, middle, and bottom are shown for a viewpoint front. The outer objects are front-top, front-mid, front-bottom. Exemplary inner objects are sauce container, LCD device and controller protections.

In embodiments, to train the model, visual semantics with nested objects (key anchor objects-parts) and outer target objects (viewpoint+areas) are selected and labeled. A model for object detection training may be built using an object detection model, such as Yolo network having a low latency and acceptable accuracy (>80%).

During data acquisition, inference may be run on frames from the camera feed, e.g., every 0.33 seconds (3FPS). Detections with a confidence score greater than 0.5 may be selected.

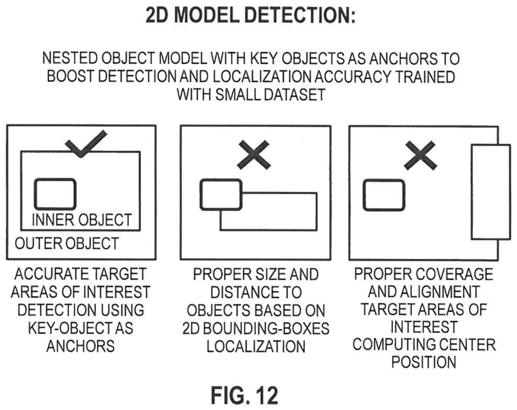

To increase viewpoint-area detection, anchor objects are used to imply or infer confidence scores when viewpoint-areas are low due to reflection or translucent areas. Bounding boxes detected may be used to determine relative size, 2D position and coverage from the scene. Object detection (bounding boxes of object of interest) outputs may be used to calculate object size within the frame and translated to the expected size expected area coverage. For 2D spatial semantics of the object, objects localization within the frame may be used to compute the center position to determine whether the object is properly centered. FIG. 12 illustrates an exemplary 2D nested object detection.

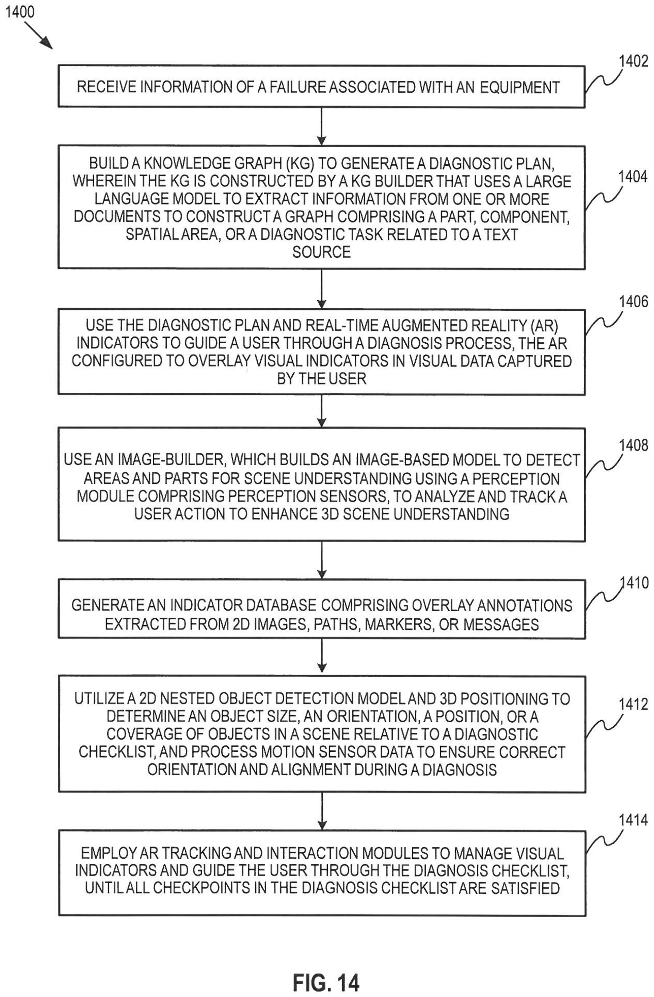

FIG. 14 is a flowchart illustrating a process for guided visual diagnosis for equipment failures, according to various embodiments of the present disclosure. In embodiments, process 1400 may start at step 1402, when information of a failure associated with an equipment is received.

At step 1404, a KG is built to generate a diagnostic plan. The KG may be constructed by a KG builder that uses an LLM to extract information from one or more documents to construct a graph comprising at least one of a part, a component, a spatial area, or a diagnostic task related to a text source, thereby reducing a need for manual data labeling or model training.

At step 1406, the diagnostic plan and real-time AR indicators are used to guide a user through a diagnosis process, the AR configured to overlay visual indicators in visual data captured by the user.

At step 1408, an image-builder, which builds an image-based model to detect areas and parts for scene understanding, the image-builder using a perception module comprising one or more perception sensors, is used to analyze and track a user action to enhance 3D scene understanding.

At step 1410, an indicator database comprising overlay annotations extracted from at least one of 2D images, paths, markers, or messages is generated.

At step 1412, a 2D nested object detection model and 3D positioning are used to determine at least one of an object size, an orientation, a position, or a coverage of objects in a scene relative to a diagnostic checklist, and processing motion sensor data to ensure correct orientation and alignment during a diagnosis.

At step 1414, AR tracking and interaction modules are employed to manage visual indicators and guide the user through the diagnosis checklist, until all checkpoints in the diagnosis checklist are satisfied.

One skilled in the art shall recognize that: (1) certain steps may optionally be performed; (2) steps may not be limited to the specific order set forth herein; (3) certain steps may be performed in different orders; and (4) certain steps may be done concurrently.

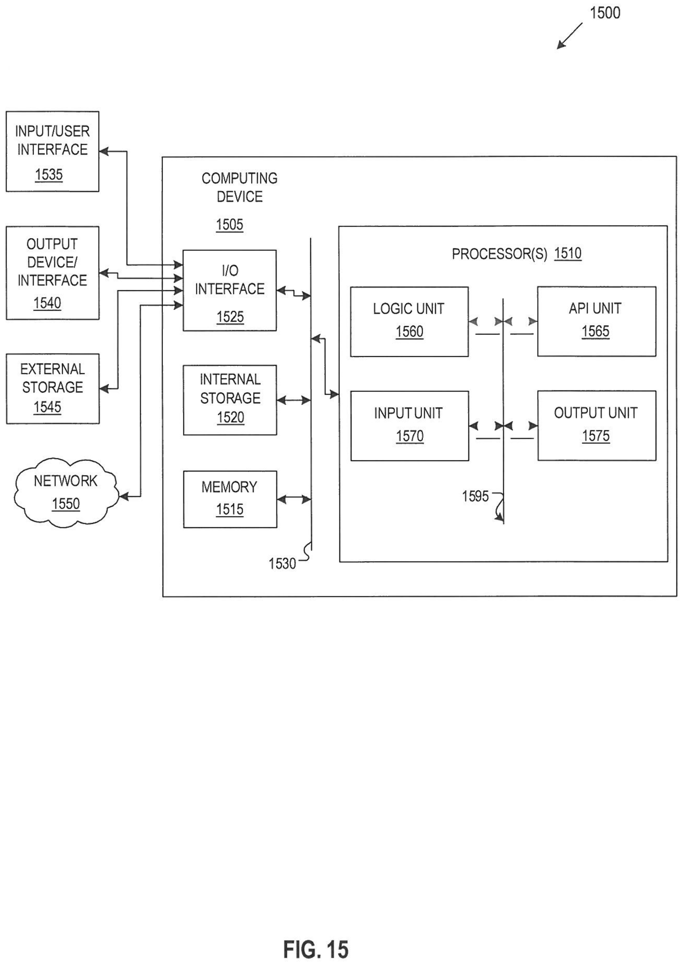

FIG. 15 illustrates an example computing environment with an example computer device suitable for use in some example implementations. Computer device 1505 in computing environment 1500 can include one or more processing units, cores, or processors 1510, memory 1515 (e.g., RAM, ROM, and/or the like), internal storage 1520 (e.g., magnetic, optical, solid-state storage, and/or organic), and/or I/O interface 1525, any of which can be coupled on a communication mechanism or bus 1530 for communicating information or embedded in the computer device 1505. I/O interface 1525 is also configured to receive images from cameras or provide images to projectors or displays, depending on the desired implementation.

Computer device 1505 can be communicatively coupled to input/user interface 1535 and output device/interface 1540. Either one or both of input/user interface 1535 and output device/interface 1540 can be a wired or wireless interface and can be detachable. Input/user interface 1535 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 1540 may include a display, television, monitor, printer, speaker, braille, or the like. In some example implementations, input/user interface 1535 and output device/interface 1540 can be embedded with or physically coupled to the computer device 1505. In other example implementations, other computer devices may function as or provide the functions of input/user interface 1535 and output device/interface 1540 for a computer device 1505.

Examples of computer device 1505 may include highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 1505 can be communicatively coupled (e.g., via I/O interface 1525) to external storage 1545 and network 1550 for communicating with any number of networked components, devices, and systems, including one or more computer devices of the same or different configurations. Computer device 1505 or any connected computer device can be functioning as, providing services of, or referred to as a server, client, thin server, general machine, special-purpose machine, or another label.

I/O interface 1525 can include wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 1500. Network 1550 can be any network or combination of networks (e.g., the Internet, local area network, wide area network, a telephonic network, a cellular network, a satellite network, and the like).

Computer device 1505 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid-state media (e.g., RAM, ROM, flash memory, solid-state storage), and other non-volatile storage or memory.

Computer device 1505 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1510 can execute under any operating system (OS) (not shown), in a native or virtual environment. One or more applications can be deployed that include logic unit 1560, application programming interface (API) unit 1565, input unit 1570, output unit 1575, and inter-unit communication mechanism 1595 for the different units to communicate with each other, with the OS, and with other applications (not shown). The described units and elements can be varied in design, function, configuration, or implementation and are not limited to the descriptions provided. Processor(s) 1510 can be in the form of hardware processors such as central processing units (CPUs) or a combination of hardware and software units.

In some example implementations, when information or an execution instruction is received by API unit 1565, it may be communicated to one or more other units (e.g., logic unit 1560, input unit 1570, output unit 1575). In some instances, logic unit 1560 may be configured to control the information flow among the units and direct the services provided by API unit 1565, input unit 1570, and output unit 1575, in some example implementations described above. For example, the flow of one or more processes or implementations may be controlled by logic unit 1560 alone or in conjunction with API unit 1565. The input unit 1570 may be configured to obtain input for the calculations described in the example implementations, and the output unit 1575 may be configured to provide output based on the calculations described in example implementations.

Processor(s) 1510 can be configured to execute a method or computer instructions which can involve, performing steps comprising, in response to receiving information of a failure associated with an equipment, using an LLM to build a KG that is used to generate a diagnostic plan, wherein the KG is constructed by a KG builder that extracts information from one or more documents to construct a graph including at least one of a part, component, spatial area, or a diagnostic task related to a text source, thereby reducing a need for manual data labeling or model training, as described, for example, with respect to FIG. 2.

Processor(s) 1510 can be configured to execute a method or computer instructions which can involve using the diagnostic plan and real-time AR indicators to guide a user through a diagnosis process, the AR configured to overlay visual indicators in visual data captured by the user, as described, for example, with respect to FIG. 2.

Processor(s) 1510 can be configured to execute a method or computer instructions which can involve using an image-builder, which builds an image-based model to detect areas and parts for scene understanding, the image-builder using a perception module including one or more perception sensors, to analyze and track a user action to enhance 3D scene understanding, as described, for example, with respect to FIG. 3 and FIG. 14.

Processor(s) 1510 can be configured to execute a method or computer instructions which can involve generating an indicator database including overlay annotations extracted from at least one of 2D images, paths, markers, or messages, as described, for example, with respect to FIG. 2 and FIG. 14.

Processor(s) 1510 can be configured to execute a method or computer instructions which can involve utilizing a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis as described, for example, with respect to FIG. 2, FIG. 3, and FIG. 14.

Processor(s) 1510 can be configured to execute a method or computer instructions which can involve employing AR tracking and interaction modules to manage visual indicators and guide the user through the diagnostic checklist, until all checkpoints in the diagnostic checklist are satisfied, as described, for example, with respect to FIG. 2, FIG. 3, and FIG. 14.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities to achieve a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer-readable medium, such as a computer-readable storage medium or a computer-readable signal medium. A computer-readable storage medium may involve tangible mediums such as optical disks, magnetic disks, read-only memories, random access memories, solid-state devices, drives, or any other types of tangible or non-transitory media suitable for storing electronic information. A computer-readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the techniques of the present application. Various aspects and/or components of the described example implementations may be used singly or in any combination. It is intended that the specification and example implementations be considered as examples only, with the true scope and spirit of the present application being indicated by the following claims.

## Claims

1. A guided visual diagnosis method for equipment failures, the method comprising:
in response to receiving information of a failure associated with an equipment, using a large language model (LLM) to build a knowledge graph (KG) that is used to generate a diagnostic plan, wherein the KG is constructed by a KG builder that uses the LLM to extract information from one or more documents to construct a graph comprising at least one of a part, component, spatial area, or a diagnostic task related to a text source, thereby reducing a need for manual data labeling or model training;
using the diagnostic plan and real-time augmented reality (AR) indicators to guide a user through a diagnosis process, the AR configured to overlay visual indicators in visual data captured by the user;
using an image-builder, which builds an image-based model to detect areas and parts for scene understanding, the image-builder using a perception module comprising one or more perception sensors, to analyze and track a user action to enhance 3D scene understanding;
generating an indicator database comprising overlay annotations extracted from at least one of 2D images, paths, markers, or messages;
utilizing a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis; and
employing AR tracking and interaction modules to manage visual indicators and guide the user through the diagnostic checklist, until all checkpoints in the diagnostic checklist are satisfied.

2. The method of claim 1, wherein the one or more documents comprise at least one of a manual or a text.

3. The method of at least one of the previous claims, wherein the 2D nested object detection model uses a training dataset comprising a relatively small set of training samples to increase a detection accuracy.

4. The method of at least one of the previous claims, wherein the one or more perception module provides feedback and a recommendation based on the analysis and tracking of actions.

5. The method of claim 4, wherein at least one of the feedback or the recommendation is provided in real-time.

6. The method of at least one of the previous claims, wherein the text source comprises at least one of a parts lists or a failure report.

7. The method of at least one of the previous claims, wherein the one or more perception sensors comprise a camera and/or motion sensor.

8. The method of at least one of the previous claims, wherein performing an initial calibration comprises mapping the user and the equipment in a 3D space by using 2D images and AR tracking.

9. The method of claim 7, wherein each of the 2D images comprises at least a portion of an object of interest.

10. A non-transitory computer-readable medium for storing instructions for executing the method of at least one of claims 1 to 9.

11. An apparatus, comprising:
a processor, configured to:
in response to receiving information of a failure associated with an equipment, use a large language model (LLM) to build a knowledge graph (KG) that is used to generate a diagnostic plan, wherein the KG is constructed by a KG builder that extracts information from one or more documents to construct a graph comprising at least one of a part, component, spatial area, or a diagnostic task related to a text source, thereby reducing a need for manual data labeling or model training;
use the diagnostic plan and real-time augmented reality (AR) indicators to guide a user through a diagnosis process, the AR configured to overlay visual indicators in visual data captured by the user;
use an image-builder, which builds an image-based model to detect areas and parts for scene understanding, the image-builder using a perception module comprising one or more perception sensors, to analyze and track a user action to enhance 3D scene understanding;
generate an indicator database comprising overlay annotations extracted from at least one of 2D images, paths, markers, or messages;
utilize a 2D nested object detection model and 3D positioning to determine at least one of an object size, an orientation, a position, or a coverage of objects in a scene relative to a diagnostic checklist, and processing motion sensor data to ensure correct orientation and alignment during a diagnosis; and
employ AR tracking and interaction modules to manage visual indicators and guide the user through the diagnostic checklist, until all checkpoints in the diagnostic checklist are satisfied.

12. The apparatus of claim 11, wherein the one or more perception module provides feedback and a recommendation based on the analysis and tracking of actions.
